# EUROPEAN PATENT SPECIFICATION

(11) **EP 2 106 164 B1**
(45) Date of publication and mention of the grant of the patent: **27.04.2016**
(21) Application number: 08734227.5
(22) Date of filing: 04.05.2008
(51) Int. Cl.: H04W 8/06

(54) **VISITED NETWORK, HOME NETWROK, SYSTEM AND CORRESPONDING METHOD FOR USING SERVICE OF VISITED NETWORK, AND TERMINAL**
BESUCHTES NETZWERK, HEIMATNETZWERK, SYSTEM UND DAZUGEHÖRIGES VERFAHREN ZUR DIENSTNUTZUNG DES BESUCHTEN NETZWERKS SOWIE ENDGERÄT
RÉSEAU VISITÉ, RÉSEAU DE RATTACHEMENT, SYSTÈME ET PROCÉDÉ CORRESPONDANT POUR UTILISER UN SERVICE DE RÉSEAU VISITÉ, ET TERMINAL

(30) Priority: 23.08.2007 CN 200710120671
(43) Date of publication of application: 30.09.2009
(73) Proprietor: Huawei Technologies Co., Ltd., Longgang District Shenzhen, Guangdong 518129 (CN)
(72) Inventor: GUO, Zhongjie, Shenzhen Guangdong 518129 (CN)
(74) Representative: Körber, Martin Hans
(86) International application number: PCT/CN2008/070871
(87) International publication number: WO 2009/024029

(56) References cited:
- EP-A- 1 662 831
- WO-A1-2006/056364
- CN-A- 1 248 113
- CN-A- 1 645 968
- CN-A- 101 115 309
- US-A1- 2002 045 446
- US-A1- 2005 276 229
- US-A1- 2005 276 229
- HU, XIAOJUAN ET AL: 'An Agent-Based VHE System in NGN' JOURNAL OF BEIJING UNIVERSITY OF POSTS AND TELECOMMUNICATIONS vol. 27, no. 2, April 2004, pages 93 - 97, XP008112869
- SU, FANG ET AL: 'Implementation of VHE Subsystem in Intelligent Mobile Service Platform' MODERN SCIENCE & TECHNOLOGY OF TELECOMMUNICATIONS 2005 no. 2, February 2005, pages 18 - 23, XP008112868

## Description

### FIELD OF THE TECHNOLOGY

The present invention relates to a communication mobile roaming field, in particular, to a visited network, a home network, a visited network service using system, a terminal, and a method for activating a visited network service.

### BACKGROUND

Each user always subscribes to a certain network, so that the user can customize some personalized service features and service data according to his/her demands, and the personalized features are represented as a personal service environment (PSE). The PSE is formed by a series of subscription information, parameter selection related to services, parameter selection of a terminal interface, and other information related to the user's experience. From the PSE, the user can manage his/her own subscribed services and use various network services. The services capable of being used by the user in the PSE are mainly divided into two types. One type is the home network value-added service controlled by the home network environment. The other type is the value-added service offered by partners of the home network operator, the execution of such service is not controlled by the home network environment, and the finding and searching of such service may be provided by the home network environment.

The 3rd generation partnership project (3GPP) proposes a virtual home environment (VHE) concept, which aims at realizing the portability of the PSE across different networks and different terminals. Under a situation of applying for roaming, the user may carry the PSE to a visited network, and get access to the visited network, so that the personalized services the same as or similar to the home network can be obtained in the visited network.

During the process of realizing the present invention, the inventor finds that the prior art has at least the following problems.
(1) The user cannot use the corresponding service unless the valid service subscription data thereof exists in the home network.
(2) The service scope capable of being used by the user is limited to the service scope defined by the home network, for example, the home network value-added services controlled by the home environment and the value-added services offered by the partners of the home network operator, but the user cannot use the services provided by the visited network operator, for example, value-added services controlled by the visited network operator or value-added services offered by partners of the visited network operator.

EP 1662831 A1 discloses a solution to provide a service to a roaming mobile user equipment. When a user equipment roams to a visited mobile radio network VPLMN, a location up-date procedure is followed. According to this location update service a VLR associated to a MSC of the visited network VPLMN, communicates signaling data to register with a home location register (HLR) of the mobile network HPLMN that the roaming user equipment is now enjoying communications via the visited mobile radio network. Additionally, signaling data is also exchanged between a roaming home location server (R-HLR) and the home location register of the home mobile network HPLMN. As a result, subscriber information provided with the signaling data is stored in the inbound roamer database which can be used to adapt the services which are provided to the user equipment within the visited network VPLMN, according to the configuration defined in home mobile network database.

US 20020045446 A1 discloses that when a user requests access to the personal telecommunication network via its terminal, a notification will be provided to the user by notifying service provider of the home service provider. Such a notification includes a capability to accept a service of an offered service provider which is the visited service provider, and the "notification" is used to offer a visual visited environment. The user can receive the services of a service provider via the notification.

US 20050276229 A1 provides a service discovery scheme by which a network or a service provider platform communicated a list of services available to a subscriber or roaming visitor. At first, a service discovery request is sent from the user terminal equipment to the serving network. The service discovery function is executed by the serving network. The service discovery function may include comparing the list of the user's HE services with the list of services that the serving visited network and the user's home network have agreed upon to offer roaming users. The service discovery function may also determine which of the HE services the serving visited network can support.

### SUMMARY

An aspect of the present invention is to provide a visited network, which enables a visiting terminal to use services provided by the network through an identity of a virtual terminal.

Another aspect of the present invention is to provide a home network, which records log-in or log-out state information of virtual terminal information or service subscription information of a home terminal.

Another aspect of the present invention is further to provide a visited network service using system adapted to manage virtual terminal information of a visiting terminal and visited network service subscription information subscribed by the virtual terminal.

Another aspect of the present invention is still to provide a terminal, comprising a virtual terminal unit, wherein the virtual terminal unit is adapted to store virtual terminal information of the terminal, and the terminal is adapted to activate service sub scription information provided by the visited network thro ugh the virtual terminal unit.

Another aspect of the present invention is still to provide a method for activating a visited network service, which is capable of activating virtual terminal information for a visiting terminal and activating visited network service subscription information for a virtual terminal, so that the visiting terminal can use services provided by a visited network through the virtual terminal information.

In order to realize a first aspect of the present invention, an embodiment of the present invention provides a visited network, which includes a home subscriber server (HSS) and a servicing server connected to the HSS, and further includes a visiting virtual roaming management (VVRM) unit, adapted to log-in or log-out virtual terminal information after receiving a log-in or log-out notification of the virtual terminal information of a visiting terminal, wherein the VVRM unit is connected to the HSS and/or the servicing server, and is adapted to log-in or log-out service subscription information after receiving a log-in or log-out notification of the service subscription information of a virtual terminal.

In the embodiment of the visited network, the VVRM unit is adapted to manage the virtual terminal information and the visited network service subscription information of the visiting terminal in the network, which respectively includes activating or logging out the virtual terminal information of the visiting terminal and activating or logging out the visited network service subscription information, so that the visiting terminal can use visited network services provided by the network through the virtual terminal information.

In order to realize a second aspect of the present invention, an embodiment of the present invention provides a home network, which includes an HSS; and further includes a home virtual roaming management (HVRM) unit, connected to the HSS, adapted to send a log-in notification of virtual terminal information to a visited network according to a visited network service use license of a home terminal when detecting a registration message of the home terminal in the visited network and detecting that the virtual terminal information of the home terminal in the visited network is not activated, and adapted to send a log-in notification of service subscription information to the visited network according to the visited network service use license of the home terminal when detecting that the virtual terminal information of the home terminal in the visited network is activated and requested service subscription information is not activated.

In the embodiment of the home network, the HVRM unit is adapted to manage virtual terminal information and visited network service subscription information of the home terminal in the network, which respectively includes activating or logging out the virtual terminal information of the home terminal and activating or logging out the visited network service subscription information, so as to realize a dynamic interaction of the information between the network and the visited network visited by the home terminal.

In order to realize a third aspect of the present invention, an embodiment of the present invention provides a visited network service using system, including a visited network and a home network, in which the visited network comprises an HSS and a servicing server connected to the first HSS, and the home network comprises a second HSS;
the visited network further includes a visiting virtual roaming management (VVRM) unit, adapted to log-in or log-out virtual terminal information after receiving a log-in or log-out notification of the virtual terminal information of a visiting terminal; and the VVRM unit is connected to the first HSS and/or the servicing server, and is adapted to log-in or log-out service subscription information after receiving a log-in or log-out notification of the service subscription information of a virtual terminal;
the home network further includes an HVRM unit, connected to the second HSS; and adapted to send a log-in notification of the virtual terminal information to the VVRM unit in the visited network according to a visited network service use license of a home terminal when detecting a registration message of the home terminal in the visited network and detecting that the virtual terminal information of the home terminal in the visited network is not activated, and send a log-in notification of the service subscription information to the VVRM unit in the visited network according to the visited network service use license of the home terminal when detecting that the virtual terminal information of the home terminal in the visited network is activated and requested service subscription information is not activated; and
the VVRM unit and the HVRM unit are connected to each other, and are adapted to cooperate with each other to control a log-in or logout operation of the virtual terminal information and the service subscription information;
wherein the virtual terminal information is the information of the virtual terminal which is adapted to be activated by the visited network for the visiting terminal, and to be used by the visiting terminal to activate services provided by the visited network.

In the embodiment of the visited network service using system, the VVRM unit introduced into the visited network and the HVRM unit introduced into the home network are adapted to manage the virtual terminal information and the visited network service subscription information of the visiting terminal/the home terminal, so that the visiting terminal in the visited network is enabled to use the visited network service provided by the visited network through the virtual terminal information thereof. As compared with the prior art that only services provided by the home network can be used, the present invention expands the service scope used by the visiting terminal and improves the customer loyalty, thereby improving the benefit of the operator. Meanwhile, the modification on the system architecture is relatively small, so that the existing system architecture can be conveniently modified, the modification cost is low, and the modification cycle is short.

In order to realize a fourth aspect of the present invention, an embodiment of the present invention provides a terminal including a virtual terminal unit, wherein when the terminal roams to a visited network, the visited network activates virtual terminal information of the terminal and stores the virtual terminal information into the virtual terminal unit, and the terminal activates service subscription information provided by the visited network through the virtual terminal unit; wherein the virtual terminal information is the information of the virtual terminal which is adapted to be activated by the visited network for the visiting terminal, and to be used by the visiting terminal to activate services provided by the visited network.

In the embodiment of the terminal, a virtual terminal unit is further added into the existing terminal, which enables the terminal to have a dual identity. When roaming to the visited network, the terminal uses services provided by the visited network as the virtual terminal through the virtual terminal unit, so that the service scope used by the subscriber through the terminal is expanded, the user loyalty is improved, thereby improving the benefit of the operator.

In order to realize a fifth aspect of the present invention, the present invention provides a method for activating a visited network service, including:
sending a registration message of a home terminal in a visited network to a home network from the visited network;
notifying, by a home virtual roaming management (HVRM) unit in the home network, the home terminal to register virtual terminal information thereof at the visited network after confirming that the virtual terminal information of the home terminal in the visited network is activated;
selecting, by a virtual terminal, a required visited network service and sending a log-in application of visited network service subscription information to a visiting virtual roaming management (VVRM) unit in the visited network; and
activating, by the VVRM unit in the visited network, the visited network service subscription information for the virtual terminal;
wherein the virtual terminal information is the information of the virtual terminal which is adapted to be activated by the visited network for the visiting terminal, and to be used by the visiting terminal to activate services provided by the visited network.

In the embodiment of the method for activating the visited network service, the visiting terminal of the visited network selects and activates the visited network service in the visited network through the virtual terminal, and thus, under a roaming situation, the visiting terminal is enabled to experience the visited network service. As compared with the prior art that only the services provided by the home network can be used, the present invention expands the service scope used by the visiting terminal and improves the customer loyalty, thereby improving the benefit of the operator.

### BRIEF DESCRIPTION OF THE DRAWINGS

FIG. 1 is a schematic structural view of Embodiment 1 of a visited network according to the present invention;
FIG. 2 is a schematic structural view of Embodiment 2 of a visited network according to the present invention;
FIG. 3 is a schematic structural view of Embodiment 1 of a home network according to the present invention;
FIG. 4 is a schematic structural view of Embodiment 2 of a home network according to the present invention;
FIG. 5 is a schematic structural view of a preferred embodiment of a visited network/home network according to the present invention;
FIG. 6 is a schematic structural view of Embodiment 1 of a visited network service using system according to the present invention;
FIG. 7 is a schematic structural view of Embodiment 2 of a visited network service using system according to the present invention;
FIG. 8 is a schematic structural view of an embodiment of an IMS network-based visited network service using system according to the present invention;
FIG. 9 is a schematic structural view of Embodiment 1 of a terminal according to the present invention;
FIG. 10 is a schematic structural view of Embodiment 2 of a terminal according to the present invention;
FIG. 11 is a flow chart of Embodiment 1 of a method for activating a visited network service according to the present invention;
FIG. 12 is a flow chart of Embodiment 2 of a method for activating a visited network service according to the present invention;
FIG. 13 is a flow chart of an embodiment of activating virtual terminal information of a visiting terminal in FIG. 12;
FIG. 14 is a signaling flow chart in which a terminal registers at a visited network and registers registration information at a home network according to the present invention;
FIG. 15 is a signaling flow chart of a preferred embodiment of activating virtual terminal information of a visiting terminal according to the present invention;
FIG. 16 is a.signaling flow chart of an embodiment in which a virtual terminal registers at a visited network according to the present invention;
FIG. 17 is a signaling flow chart of an embodiment of subscribing services provided by a visited network according to the present invention;
FIG. 18 is a signaling flow chart of an embodiment in which a virtual terminal initiates a service call according to the present invention;
FIG. 19 is a signaling flow chart of an embodiment in which a virtual terminal receives a service call according to the present invention;
FIG. 20 is a signaling flow chart of an embodiment of logging out a service according to the present invention; and
FIG. 21 is a signaling flow chart of an embodiment of logging out a virtual terminal according to the present invention.

### DETAILED DESCRIPTION

In the embodiments of the present invention, the following physical or logic units are mentioned.

A home terminal refers to a terminal that roams to a visited network, which is called a home terminal with respect to a home network.

A visiting terminal refers to a terminal that roams to a visited network, which is called a visiting terminal with respect to the visited network.

A virtual terminal is correspondingly activated by the visited network for one visiting terminal. The visiting terminal activates services provided by the visited network by using the virtual terminal.

An HSS is adapted to store identity information, service subscription information, and current service information of a home mobile terminal.

A business/operation support system (BSS/OSS) is a system for supporting operator integration and sharing of information resources.

A customer relationship management list of the virtual terminal is adapted to store visited network service information for being selected by the virtual terminal.

A VVRM unit is adapted to manage the virtual terminal or the service subscription of the visiting terminal.

An HVRM unit is adapted to manage the virtual terminal or the service subscription of the home terminal.

A servicing server is located in the visited network, and is adapted to store services provided by the visited network, which may be services provided by an operator of the visited network, or services provided by partners of the visited network.

A call session control function (CSCF) is one of the most important functional entities in an IP multimedia subsystem (IMS), and is adapted to process multimedia sessions of the terminal. The functions thereof include multimedia session control, address translation, service conversion on service negotiation and the like. The CSCF realizes main soft-switch control functions in a multimedia call in the IMS, which may be considered as an SIP server in IETF architecture, and finish a call gateway function, a call service triggering function, and a routing selecting function.

A proxy CSCF (P-CSCF) unit is adapted to provide routing for a signaling of a service used by the terminal.

A service CSCF (S-CSCF) unit is adapted to provide service logic control for the service used by the terminal.

An interrogating CSCF (I-CSCF) unit is a node connected to an internal or external P-CSCF or S-CSCF in the IMS network, and is adapted to interrogate HSS registration information of the terminal.

A technical solution of the present invention is further described below in detail with reference to the accompanying drawings and embodiments.

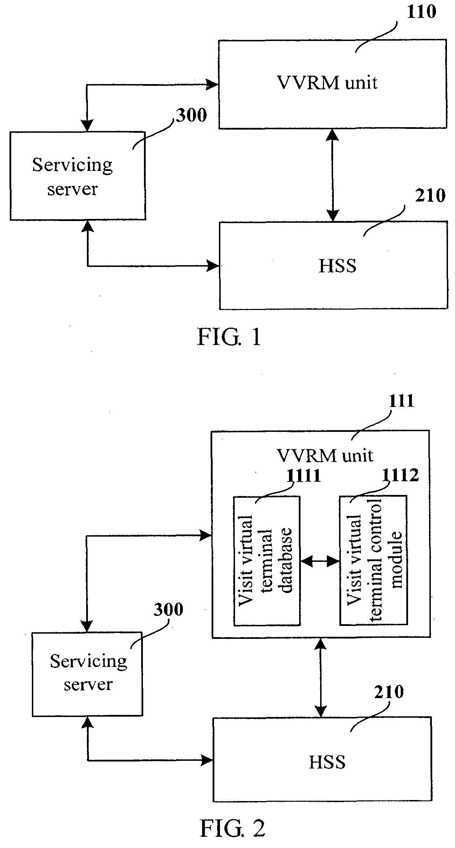

FIG. 1 is a schematic structural view of Embodiment 1 of a visited network according to the present invention. The visited network includes an HSS 210 and a servicing server 300 connected to the HSS 210, and further includes a VVRM unit 110.

The VVRM unit 110 is adapted to log-in or log-out virtual terminal information after receiving a log-in or log-out notification of the virtual terminal information of a visiting terminal.

The VVRM unit 110 is connected to the HSS 210 and/or the servicing server 300, and is adapted to log-in or log-out service subscription information after receiving a log-in or log-out notification of the service subscription information of a virtual terminal. The service subscription information may be logged-in or logged-out in the following manners. (1) The service subscription information is directly logged-in or logged-out in the servicing server 300. (2) The service subscription information is directly logged-in or logged-out in the HSS 210. (3) After being logged-in or logged-out in the servicing server 300, the service subscription information is correspondingly logged-in or logged-out in the HSS 210. The third manner is described in this embodiment with reference to FIG. 1, that is, the VVRM unit 110 is connected to the HSS 210 and the servicing server 300, and after being logged-in or logged-out in the servicing server 300, the service subscription information is correspondingly logged-in or logged-out in the HSS 210.

In this embodiment, the VVRM unit is introduced to manage a log-in of the virtual terminal information of the visiting terminal and the service subscription information of the virtual terminal in the visited network, which respectively includes activating or logging out the virtual terminal information of the visiting terminal and activating or logging out the service subscription information of the virtual terminal, so as to assign an identity of the virtual terminal to the visiting terminal, so that the visiting terminal is enabled to enjoy the services provided by the visited network through the identity of the virtual terminal.

In this embodiment, the VVRM unit is connected to the HSS, and is further adapted to store the virtual terminal information into the HSS or delete the virtual terminal information from the HSS. The VVRM unit is connected to the HSS, and is further adapted to store the service subscription information into the HSS or delete the service subscription information from the HSS.

FIG. 2 is a schematic structural view of Embodiment 2 of the visited network according to the present invention. The difference between this embodiment and the Embodiment 1 of the visited network lies in that the VVRM unit 111 includes a visiting virtual terminal database 1111 and a visiting virtual terminal control module 1112.

The visiting virtual terminal database 1111 is adapted to record a log-in or log-out situation of the virtual terminal information of the visiting terminal, and a log-in or log-out situation of the service subscription information.

The visiting virtual terminal control module 1112 is connected to the visiting virtual terminal database 1111, and is adapted to log-in or log-out the virtual terminal information after receiving a log-in or log-out notification of the virtual terminal information of the visiting terminal, and record the log-in or log-out situation of the virtual terminal information into the visiting virtual terminal database; and adapted to log-in or log-out the service subscription information after receiving a log-in or log-out notificati on of the service subscription information of the virtual terminal, and record the log-in or log-out situation of the service subscription information into the visiting virtual terminal database.

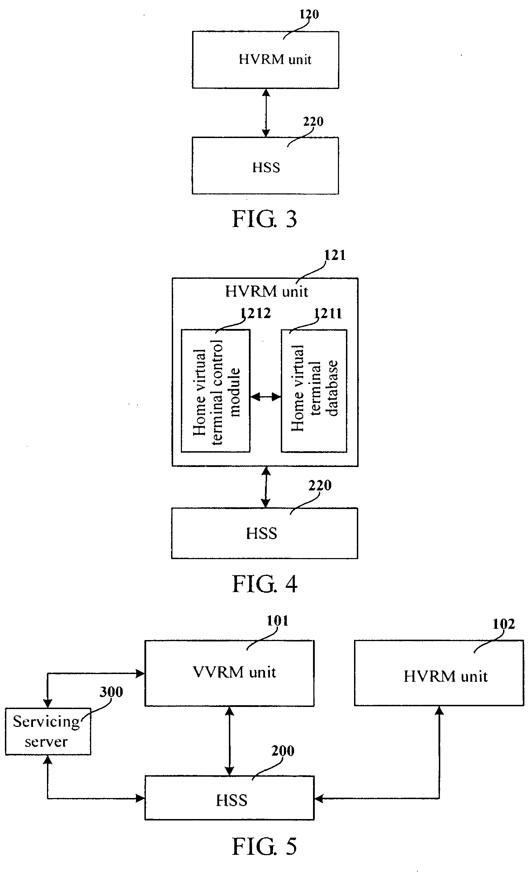

FIG. 3 is a schematic structural view of Embodiment 1 of a home network according to the present invention. The home network includes an HSS 220, and further includes an HVRM unit 120 connected to the HSS 220. The HVRM unit 120 is adapted to send a log-in notification of virtual terminal information to a VVRM unit in a visited network according to a visited network service use license of a home terminal when detecting a registration message of the home terminal in the visited network and detecting that the virtual terminal information of the home terminal in the visited network is not activated; and adapted to send a log-in notification of service subscription information to the VVRM unit in the visited network according to the visited network service use license of the home terminal when detecting that the virtual terminal information of the home terminal in the visited network is activated and requested service subscription information is not activated.

In the embodiment of the home network, the HVRM unit is introduced to control a log-in operation of the virtual terminal information of the home terminal network and the service subscription information of the virtual terminal in the home network, so as to realize a dynamic interaction of information between the home network of the home terminal and the visited network of the home terminal.

FIG. 4 is a schematic structural view of Embodiment 2 of the home network according to the present invention. The difference between this embodiment and the Embodiment 1 of the home network lies in that the HVRM unit 121 includes a home virtual terminal database 1211 and a home virtual terminal control module 1212.

The home virtual terminal database 1211 is adapted to record a log-in or log-out situation of virtual terminal information of a home terminal in a visited network, and a log-in or log-out situation of service subscription information.

The home virtual terminal control module 1212 is connected to the home virtual terminal database 1211, and is adapted to send a log-in notification of the virtual terminal information to the visited network when detecting a registration message of the home terminal in the visited network and detecting that the virtual terminal information of the home terminal in the visited network is not activated; send a log-in notification of the service subscription information to a VVRM unit in the visited network when detecting that the virtual terminal information of the home terminal in the visited network is activated and requested service subscription information is not activated; record that the virtual terminal information of the home terminal in the VVRM unit of the visited network is logged-in or logged-out after receiving a log-in or log-out success notification of the virtual terminal information of the home terminal; and record that the service subscription information is logged-in or logged-out after receiving a log-in or log-out success notification of the service subscription information.

FIG. 5 is a schematic structural view of a preferred embodiment of a visited network/home network according to the present invention. In addition to a VVRM unit adapted to manage victual terminal information of a visiting terminal in the network and service subscription information of a virtual terminal thereof, the visited network of this embodiment further includes: an HVRM unit adapted to manage a virtual terminal of a home terminal in the network and service subscription information of the virtual terminal. The network of this embodiment integrates the features of the embodiments of the above two networks, so as to form one network capable of managing both the visiting terminal in the network and the home terminal in the network. Referring to FIG. 5, the network includes an HSS 200 and a servicing server 300 connected to the HSS 200, and further includes a VVRM unit 101 and an HVRM unit 102. The VVRM unit 101 is adapted to log-in or log-out the virtual terminal information after receiving a log-in or log-out notification of the virtual terminal information of the visiting terminal. The VVRM unit 101 is respectively connected to the HSS 200 and the servicing server 300, and is adapted to log-in or log-out the service subscription information after receiving a log-in or log-out notification of the service subscription information of the virtual terminal. The HVRM unit 102 is connected to the HSS 200, and is adapted to send a log-in notification of the virtual terminal information to the visited network according to a visited network service use license of the home terminal when detecting a registration message of the home terminal in the visited network and detecting that the virtual terminal information of the home terminal in the visited network is not activated; and adapted to send a log-in notification of the service subscription information to the visited network according to the visited network service use license of the home terminal when detecting that the virtual terminal information of the home terminal in the visited network is activated and requested service subscription information is not activated.

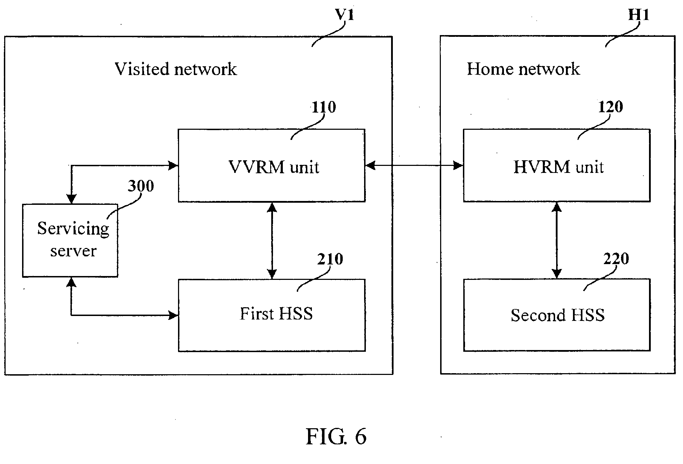

FIG. 6 is a schematic structural view of Embodiment 1 of a visited network service using system according to the present invention. The system includes a visited network V1 and a home network H1. The visited network V1 includes a first HSS 210 and a servicing server 300 connected to the first HSS 210, and further includes a VVRM unit 110. The home network H1 includes a second HSS 220, and further includes a HVRM unit 120. The VVRM unit 110 in the visited network V1 and the HVRM unit 120 in the home network H1 are connected to each other, and are adapted to cooperate with each other to control a log-in or logout operation of the virtual terminal information and the service subscription information.

The VVRM unit 110 is adapted to log-in or log-out virtual terminal information after receiving a log-in or log-out notification of the virtual terminal information of a visiting terminal, and register log-in or log-out information of the virtual terminal on the HVRM unit 120 in the home network H1. The VVRM unit 110 is connected to the first HSS 210 and/or the servicing server 300, and is adapted to log-in or log-out service subscription information after receiving a log-in or log-out notification of the service subscription information of the virtual terminal, and register log-in or log-out information of the service subscription information of the virtual terminal on the HVRM unit 120 in the home network H1. The HVRM unit 120 is connected to the second HSS 220, and is adapted to send a log-in notification of the virtual terminal information to the VVRM unit 110 in the visited network V1 according to a visited network service use license of the home terminal when detecting a registration message of the home terminal in the visited network and detecting that the virtual terminal information of the home terminal in the visited network is not activated; and adapted to send a log-in notification of the service subscription information to the VVRM unit 110 in the visited network V1 according to the visited network service use license of the home terminal when detecting that the virtual terminal information of the home terminal in the visited network is activated and requested service subscription information is not activated.

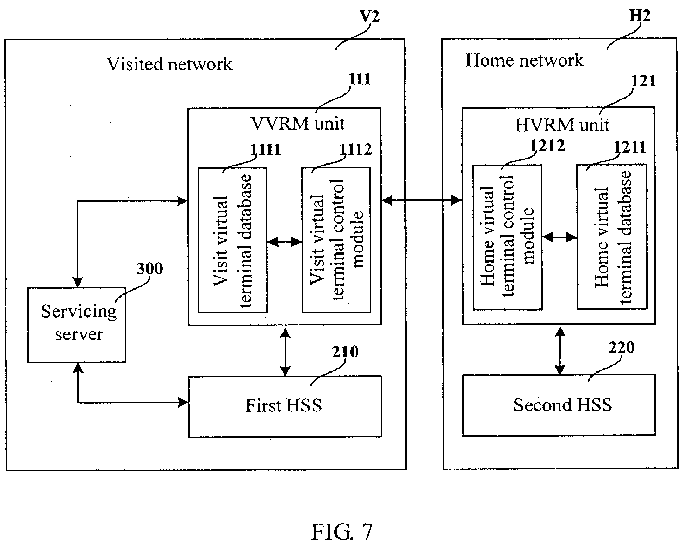

FIG. 7 is a schematic structural view of Embodiment 2 of the visited network service using system according to the present invention. The system includes a visited network V2 and a home network H2. The difference between this embodiment and the Embodiment 1 of the visited network service using system is described as follows.

A VVRM unit 111 specifically includes: a visiting virtual terminal database 1111, adapted to record a log-in or log-out situation of virtual terminal information of a visiting terminal and a log-in or log-out situation of service subscription information; and a visiting virtual terminal control module 1112, connected to the visiting virtual terminal database 111, and adapted to log-in or log-out the virtual terminal information after receiving a log-in or log-out notification of the virtual terminal information of the visiting terminal, and record log-in or log-out situation of the virtual terminal information into the visiting virtual terminal database; and activate or log-out the service subscription information after receiving the log-in or log-out notification of the service subscription information of the virtual terminal, and record the log-in or log-out situation of the service subscription information into the visiting virtual terminal database.

An HVRM unit 121 specifically includes: a home virtual terminal database 1211, adapted to record a log-in or log-out situation of the virtual terminal information of a home terminal in the visited network and a log-in or log-out situation of the service subscription information; and a home virtual terminal control module 1212, connected to the home virtual terminal database 1211, and adapted to send a log-in notification of the virtual terminal information to the visited network when detecting a registration message of the home terminal in the visited network and detecting that the virtual terminal information of the home terminal in the visited network is not activated; send a log-in notification of the service subscription information to the visited network when detecting that the virtual terminal information of the home terminal in the visited network is activated and requested service subscription information is not activated; record that the virtual terminal information of the home terminal in the visited network is logged-in or logged-out after receiving a log-in or log-out success notification of the virtual terminal information of the home terminal; and record that the service subscription information is logged-in or logged-out after receiving a log-in or log-out success notification of the service subscription information.

The visiting virtual terminal control module 1112 of the VVRM unit 111 and the home virtual terminal control module 1212 of the HVRM unit 121 are connected to each other, and are adapted to cooperate with each other to control a log-in or logout operation of the virtual terminal information and the service subscription information.

In the embodiment of the visited network service using system, the VVRM unit introduced into the visited network and the HVRM unit introduced into the home network are adapted to manage the virtual terminal of the visiting terminal/the home terminal and the service subscription of the virtual terminal, so that the visiting terminal in the visited network is enabled to use services provided by the visited network through the virtual terminal thereof. As compared with the prior art that only the services provided by the home network can be used, the present invention expands the service scope used by the visiting terminal and improves the customer loyalty, thereby improving the benefit of the operator. Meanwhile, the modification on the system architecture is relatively small, so that the existing system architecture can be conveniently modified, the modification cost is low, and the modification cycle is short.

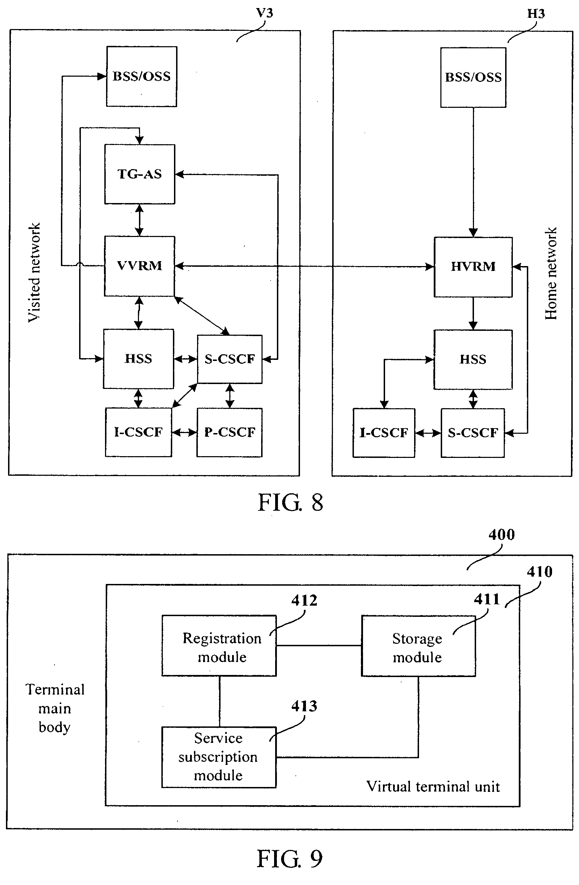

Referring to FIG. 8, the visited network service using system according to the present invention is further described below in detail by taking an IMS network architecture as an example. A visited network V3 includes: a P-CSCF and an S-CSCF, adapted to realize a communication connection between a mobile terminal and the visited network V3; an HSS, adapted to store identity information, service subscription information, and current service information (for example, geographical information) of the mobile terminal (including a visiting terminal and a virtual terminal thereof) in the visited network V3; a travel guide application service (TG-AS), adapted to provide a special service for the visited network V3, in which it is assumed that the service gets access to the visited network V3 in an SIP-AS form, but it is not limited to the SIP-AS form; and a BSS/OSS, serving as a system that supports operator integration and sharing of information resource for the visited network V3. A home network H3 includes: an I-CSCF, adapted to provide a node connected to the P-CSCF in the visited network V3; an S-CSCF, adapted to realize service logic control of the services used by the mobile terminal; an HSS, adapted to store identity information, service subscription information, and current service information (for example, geographical information) of a mobile terminal (including a home terminal and a virtual terminal thereof) in the home network H3; and a BSS/OSS, serving as a system that supports operator integration and sharing of information resource for the home network H3. The visited network V3 further includes a VVRM. The home network H3 further includes an HVRM. The VVRM in the visited network V3 and the HVRM in the home network H3 are connected to each other, and are adapted to cooperate with each other to control a log-in or logout operation of the virtual terminal information and the service subscription information.

The VVRM is adapted to log-in or log-out virtual terminal information after receiving a log-in or log-out notification of the virtual terminal information of the visiting terminal, and register log-in or log-out information of the virtual terminal on the HVRM in the home network H1. The VVRM is connected to the HSS and/or the TG-AS in the visited network V3, and adapted to log-in or log-out the service subscription information after receiving a log-in or log-out notification of the service subscription information of the virtual terminal, and register log-in or log-out information of the service subscription information of the virtual terminal on the HVRM in the home network. The HVRM is connected to the HSS in the home network H3, and is adapted to send a log-in notification of the virtual terminal information to the VVRM in the visited network V3 according to a visited network service use license of the home terminal when detecting a registration message of the home terminal in the visited network V3 and detecting that the virtual terminal information of the home terminal in the visited network V3 is not activated; and adapted to send a log-in notification of the service subscription information to the VVRM in the visited network V3 according to the visited network service use license of the home terminal, when detecting that the virtual terminal information of the home terminal in the visited network is activated and requested service subscription information is not activated.

FIG. 9 is a schematic structural view of Embodiment 1 of a terminal according to the present invention. The terminal includes a terminal main body 400, and the terminal main body 400 includes functional modules of an existing terminal. The terminal of this embodiment further includes a virtual terminal unit 410, and when the terminal roams to a visited network, the visited network activates virtual terminal information of the terminal and stores the virtual terminal information into the virtual terminal unit 410, and the terminal activates service subscription information provided by the visited network by using the virtual terminal unit 410. The virtual terminal unit 410 specifically includes: a storage module 411, adapted to store the virtual terminal information; a registration module 412, connected to the storage module 411, and adapted to register the virtual terminal information at the visited network; and a service subscription module 413, connected to the storage module 411 and the registration module 412 respectively, and adapted to activate the service subscription information provided by the visited network.

In the embodiment of the above terminal, a virtual terminal unit is added into the existing terminal, which enables the terminal to have a dual identity. When roaming to the visited network, the terminal is enabled to use services provided by the visited network through the identity of the virtual terminal by using the virtual terminal unit, so that the service scope used by the subscriber through the terminal is expanded, the user loyalty is improved, thereby improving the benefit of the operator.

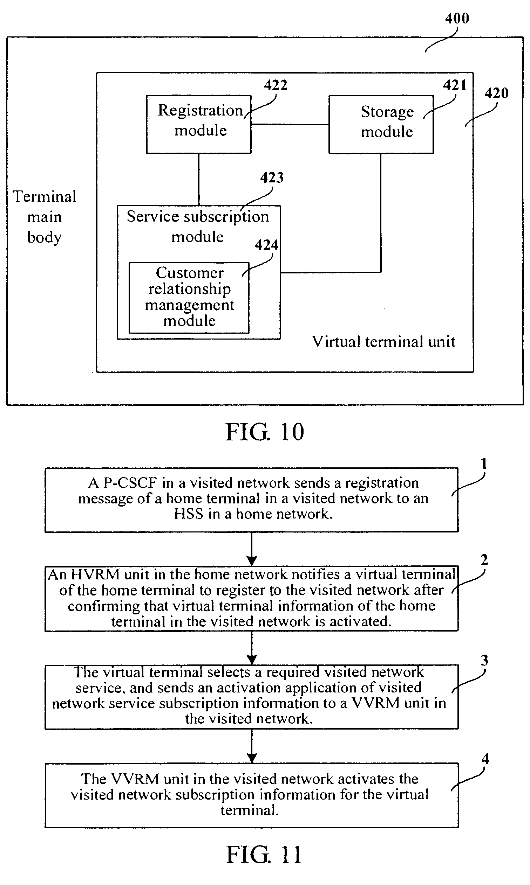

FIG. 10 is a schematic structural view of Embodiment 2 of a terminal according to the present invention. The operator or service provider may further provide a self-service client for users, which may be realized through a customer relationship management module. In this embodiment, a virtual terminal unit 420 includes a storage module 421; a registration module 422 connected to the storage module 421; and a service subscription module 423 connected to the storage module 421 and the registration module 422 respectively. The service subscription module 423 further includes a customer relationship management module 424, adapted to provide a self-service interface for the user to select or use the visitor location service.

With the IMS roaming architecture shown in FIG. 8, an embodiment in which a visiting terminal activates a visited network service in a visited network through a virtual terminal is further described below, and the flows related to the process of using the services provided by the visited network are described as follows.

FIG. 11 is a flow chart of Embodiment 1 of a method for activating a visited network service according to the present invention. The method includes the steps as follows.

In Step 1, a P-CSCF in a visitor location network registers a registration message of a home terminal in a visited network at an HSS in a home network. The registration information may include a visited network identifier, a visited network identifier, a visiting terminal identifier, and so on.

In Step 2, an HVRM unit in the home network notifies a virtual terminal of the home terminal to register at the visited network after confirming that virtual terminal information of the home terminal in the visited network is activated.

In Step 3, the virtual terminal selects a required visited network service, and sends a log-in application of visited network service subscription information to a VVRM unit in the visited network.

In Step 4, the VVRM unit in the visited network activates the visited network service subscription information for the virtual terminal.

In this embodiment, the visiting terminal of the visited network selects and activates the visited network service in the visited network by using the virtual terminal, and thus, under a roaming situation, the visiting terminal is enabled to experience the visited network service. As compared with the prior art that only the services provided by the home network can be used, the present invention expands the service scope used by the visiting terminal and improves the customer loyalty, thereby improving the benefit of the operator.

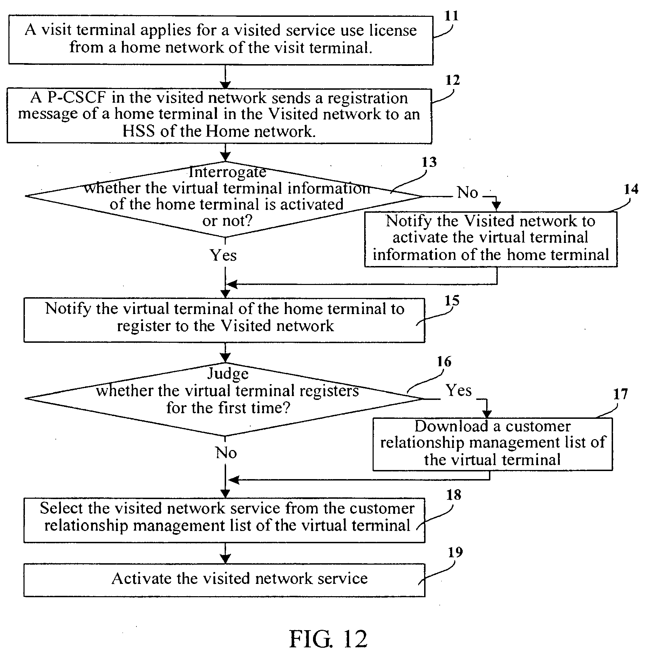

FIG. 12 is a flow chart of Embodiment 2 of a method for activating a visited network service according to the present invention. The method includes the steps as follows.

In Step 11, a visiting terminal applies for a visited network service use license from a home network of the visiting terminal, in which the visited network service use license specifies the visiting terminal to select a visited network and visited network services provided by the visited network within a protocol subscription scope of the home network thereof. In Step 12, a P-CSCF in the visited network registers a registration message of a home terminal in the visited network at an HSS of the home network. The registration information may include a visited network identifier, a visited network identifier, a visiting terminal identifier, and so on.

In Step 2 of the above embodiment, the HVRM unit in the home network confirms that the virtual terminal information of the home terminal in the visited network is activated, which specifically includes the following process. In Step 13, the HVRM unit in the home network interrogates whether the virtual terminal information of the home terminal in the visited network is activated or not, if the virtual terminal information of the home terminal in the visited network is activated, Step 15 is executed; otherwise, Step 14 is executed.

In Step 14, the VVRM unit in the visited network is notified to activate the virtual terminal information of the home terminal.

In Step 15, the virtual terminal of the home terminal is notified to register at the visited network.

As compared with the above embodiment, after confirming that the virtual terminal information of the home terminal in the visited network is activated, this embodiment further includes the following steps.

In Step 16, it is judged whether the virtual terminal registers at the visited network for the first time or not, if the virtual terminal registers at the visited network for the first time, Step 17 is executed; otherwise, Step 18 is executed.

In Step 17, a customer relationship management list of the virtual terminal is downloaded.

In Step 18, the virtual terminal selects a required visited network service from a customer relationship management module.

In Step 19, the VVRM unit in the visited network activates visited network service subscription information for the virtual terminal.

After Step 19, the visiting terminal uses the visited network service through the virtual terminal.

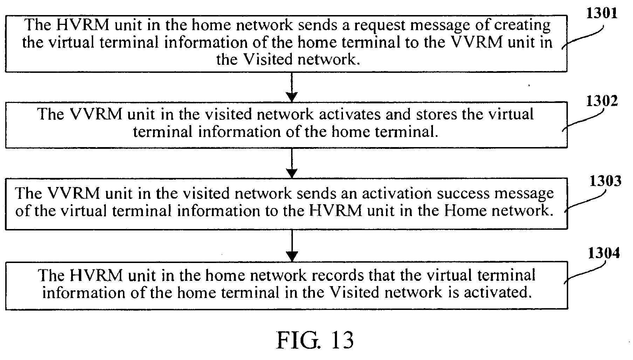

Referring to FIG 13, the activating the virtual terminal information for the visiting terminal in Step 13 further includes the following steps.

In Step 1301, the HVRM unit in the home network sends a request message of creating the virtual terminal information of the home terminal to the VVRM unit in the visited network.

In Step 1302, the VVRM unit in the visited network activates log-in data of the virtual terminal information of the visiting terminal, and stores the virtual terminal information.

In Step 1303, after activating the virtual terminal information, the VVRM unit in the visited network sends a log-in success message of the virtual terminal information to the HVRM unit in the home network.

In Step 1304, the HVRM unit in the home network records that the virtual terminal, information of the home terminal in the visited network is activated.

The virtual terminal is invisible to the user, and the visited network notifies the terminal of the log-in information of the virtual terminal, so that the user installs or updates the corresponding customer relationship management list of the virtual terminal on the terminal, and then, the user selects and activates the corresponding visited network service. The subscriber can use a certain service once he/she activates the service through the virtual terminal. During the virtual terminal activates a certain service and uses the service, the visited network operator considers the virtual terminal as a common terminal (that is, a terminal belonging to the visited network).

A UE represents a visiting terminal, and a VUE represents a virtual terminal of the visiting terminal.
(1) The UE registers the visited network service use license in the home network.

The UE may select to register the "visited network service use license" through a BSS/OSS system or a self-service system provided by a home network operator at the home network. The BSS/OSS system or the self-service system provided by the home network operator activates the service license for the UE, and sends the registered data to the HVRM, and then the HVRM sets an IMS registration service control for the UE. The UE only needs to register the visited network service use license, instead of registering specific services, and the required service may be selected after browsing the customer relationship management list of the virtual terminal provided by the visited network operator in the visitor location.
(2) The UE registers at the visited network and registers the registration information thereof at the home network.

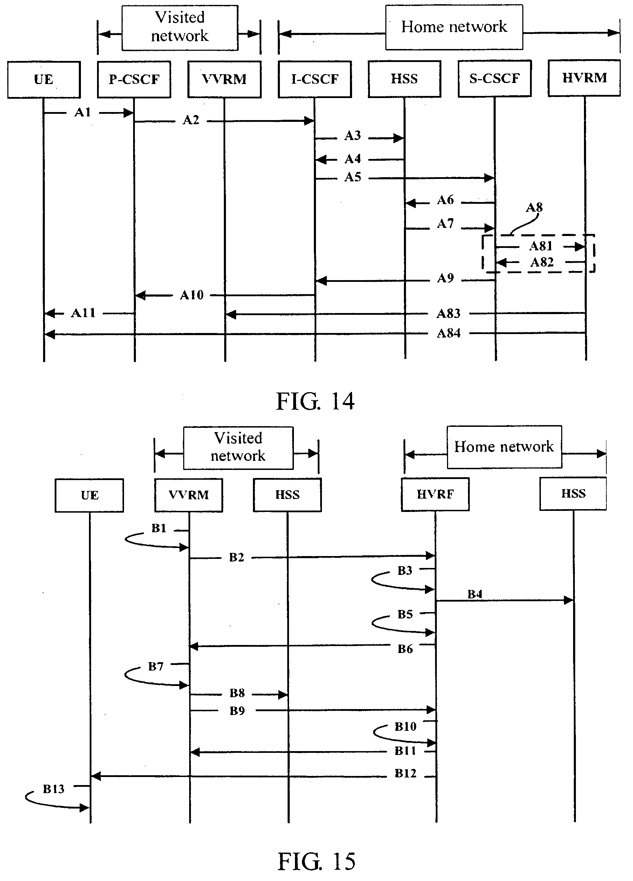

In the visited network, after the UE is booted and registers at the network, the system starts the IMS registration. Since the UE has already registered the "visited network service use license" in the home network, when the UE performs the IMS registration, once the HVRM detects the registration message of the UE, the HVRM triggers a processing operation and then delivers a registration event to the VVRM. The VVRM finishes the VUE log-in and service subscription in an asynchronous manner, and then starts using the visited network service. Referring to FIG. 14, the signaling flow that the UE registers at the visited network and registers the registration information at the home network includes the following steps.

In Step A1, the UE initiates a registration request to the P-CSCF in the visited network (by using a home network user identifier user_id, for example, userid@home.com).

In Step A2, the P-CSCF forwards the registration request to the I-CSCF in the home network.

In Step A3, the I-CSCF interrogates the HSS in the home network, and verifies validity of the registration of the UE.

In Step A4, the HSS returns the information of the UE to the I-CSCF, including the S-CSCF of the UE.

In Step A5, the I-CSCF forwards the registration request to the S-CSCF.

In Step A6, the S-CSCF registers the registration information in the registration request at the HSS.

In Step A7, the HSS registers the registration information, and returns the information of the UE to the S-CSCF.

In Step A8, the S-CSCF invokes a service control process, and triggers an HVRM process. The HVRM process specifically includes the following steps.

In Step A81, the HVRM receives a service request of visiting the visited network from the UE, and registers the registration information of the UE in the visited network. The registration information includes a visited network identifier, a visited network identifier, and a visiting terminal identifier.

In Step A82, the HVRM returns a response, and other operations are performed subsequently.

In Step A9, the S-CSCF returns a response to the I-CSCF.

In Step A10, the I-CSCF transmits the response to the P-CSCF.

In Step A11, the P-CSCF forwards the response to the UE.

After registering the registration information of the UE, the HVRM processes the registration request of the virtual user synchronously with the normal registration flow. If the VUE is not activated, Step A83 is executed, in which the HVRM delivers a processing notification to the VVRM, and then the VVRM executes the log-in process of the virtual user (with reference to a flow of activating the VUE as follows). If the VUE is activated, the flow that the VUE registers at the visited network is started (with reference to the flow that the VUE registers at the visited network as follows).
(2) The flow of activating the VUE of the UE is executed.

When the UE registers at the IMS, the HVRM is triggered. Once detecting that the UE does not activate the virtual user, the HVRM delivers a log-in notification of the virtual user to the VVRM, and the VVRM turns to activate the virtual user. The log-in notification of the virtual user includes (but not limited to) the subsequent fields, an ID of the UE, a name of the UE (optional), a code of the UE (IMS1), a service language, an access position, or an accounting attribute (real-time, non real-time). Referring to FIG. 15, the signaling flow of activating the virtual user includes the following steps.

In Step B1, before activating the virtual terminal for the UE, the VVRM interrogates whether a record that the VUE is activated for the UE exists or not by using the ID of the UE (a home identifier of the UE, for example, user_id).

In Step B2, an interrogated result is returned to the HVRM in the home network, and the interrogated result is requested to be verified. If the VUE is activated for the UE, the HVRM in the home network has the record that the VUE is activated for the UE, and if the VUE is not activated for the UE, the HVRM in the home network does not have the record that the VUE is activated for the UE.

In Step B3, the HVRM interrogates whether the record that the VUE is activated for the UE exists or not by using the ID of the UE.

In Step B4, if the record that the VUE is activated for the UE does not exist, the HVRM inspects the registered data of the UE at the HSS, including a roaming state, and checks a roaming privilege of the UE, and so on.

In Step B5, the HVRM registers a log-in request of the VUE.

In Step B6, the HVRM returns a response to the VVRM.

In Step B7, the VVRM creates the data of the VUE, including generating an ID of the VUE (v_user_id, for example, vuserid@visit.com), and registers log-in data of the VUE.

In Step B8, the VVRM activates the virtual user on the HSS, and sets the service control (for example, intercepting the registration process of the virtual user).

In Step B9, the VVRM notifies the HVRM of the home network of a log-in result.

In Step B10, the HVRM registers and records the log-in situation.

In Step B11, the HVRM returns a response to the VVRM.

In Step B12, the HVRM reports the log-in result to the UE, which includes the ID of the VUE.

In Step B13, the UE receives the notification, sets the ID of the VUE, starts the registration flow for the VUE, registers at the visited network, and becomes the virtual user of the visited network.
(3) The flow that the VUE registers at the visited network is executed.

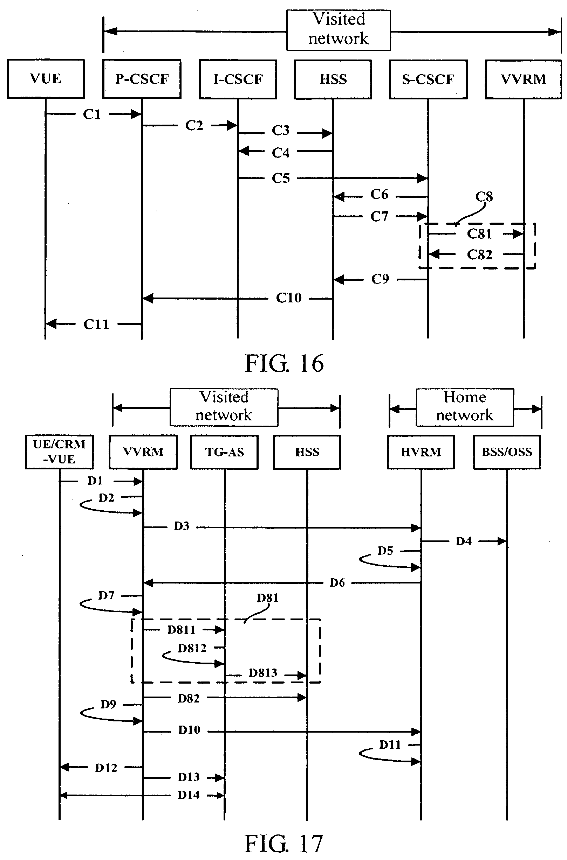

When the UE registers at the IMS, the HVRM triggers an inspecting operation, and if the VUE is activated for the UE, the HVRM delivers a VUE registration starting message to the VUE. Referring to FIG 16, the signaling flow that the VUE registers at the visited network includes the following steps.

In Step C1, the VUE initiates a registration request to the P-CSCF in the visited network (by using a virtual terminal identifier user_id of the visited network, for example, v_user_id@visit.com).

In Step C2, the P-CSCF forwards the registration request to the I-CSCF in the visited network.

In Step C3, the I-CSCF interrogates the HSS in the visited network, and verifies registration validity of the VUE.

In Step C4, the HSS returns the information of the VUE to the I-CSCF, including the S-CSCF of the VUE.

In Step C5, the I-CSCF forwards the registration request to the S-CSCF.

In Step C6, the S-CSCF registers the registration information in the registration request at the HSS.

In Step C7, the HSS registers the registration information, and returns the information of the VUE to the S-CSCF.

In Step C8, the S-CSCF invokes the service control process, and triggers the VVRM process. The VVRM process specifically includes the following steps.

In Step C81, the VVRM receives a service request of registering at the visitor location from the VUE, and registers the registration information of the VUE in the visitor location.

In Step C82, according to the service state of the VUE, the VVRM may start certain customer relationship management service processes. For example, once it is inspected that the user registers at the network for the first time, the customer relationship management list of the virtual terminal (CRM-VUE) is downloaded and installed. The CRM-VUE includes service information capable of being selected by the virtual terminal, for example, service number, service content, using scope of services, and so on.

In Step C9, the S-CSCF returns a response to the I-CSCF.

In Step C10, the I-CSCF returns the response to the P-CSCF.

In Step C11, the P-CSCF sends the response to the VUE.
(4) The service provided by the visited network is subscribed.

After being activated and becoming the VUE in the visited network, the UE can subscribe services provided by the visited network. During the above process, the VUE selects a service, registers necessary data, and submits an application, and then, the VVRM activates the applied service for the VUE. Here, it is assumed that the service capable of being subscribed by the user is TG-AS, that is, services supported by the TG-AS server. In order to be convenient for the user to select the service desired to be activated, the visited network operator provides a customer relationship management self-service interface for the VUE, and the UE selects the service from the CRM-VUE by using the VUE, thereby subscribing the service. Referring to FIG. 17, the signaling flow that the VUE subscribes the TG-AS includes the following steps.

In Step D1, the CRM-VUE is opened, and the desired service is selected. Here, the TG-AS is selected. If the relevant data of the user is required, the data can be obtained from the HSS or the BSS/OSS system in the home network and may also be input by the user. As for certain special services, the servicing server may provide a client required by the service for the user or provide an interface applicable to the service for the self-service module of the user.

In Step D2, the VVRM receives a service subscription request, and verifies the service. The verification includes, for example, checking whether it is repeatedly registered or not.

In Step D3, the VVRM sends a request to the HVRM, performs a log-in inspection, and requests necessary user data.

In Step D4, the HVRM receives the processing request and inspects the request from the user, which includes inspecting the roaming state registered in the HSS and checking the roaming privilege of the user. If the checking process is successfully passed, the HSS data and the user information in the BSS/OSS are extracted (the privilege for extracting data is controlled through a setting motion).

In Step D5, the HVRM registers the service subscription.

In Step D6, a processing response is returned to the VVRM.

In Step D7, the VVRM registers the service subscription request.

After registering the service subscription request, the VVRM performs the service activating flow, which may be implemented in various manners as follows.

In Step D81, the VVRM delivers the service subscription request to the TG-AS, and the TG-AS for providing the travel guide activates the service subscription.

Step D81 further includes the following steps: in Step D811, the VVRM delivers the log-in request to the TG-AS; in Step D812, the TG-AS performs the log-in process; and if necessary, Step D813 is further included, in which the VVRM activates the service on the HSS.

Alternatively, in Step D82, the VVRM directly activates the service through the HSS.

After the service subscription is activated, the following steps are executed.

In Step D9, the VVRM registers the log-in result.

In Step D10, the VVRM forwards the log-in result to the HVRM of the home network.

In Step D11, the HVRM registers and records the log-in situation.

In Step D12, the VVRM reports the log-in result to the VUE.

In Step D13, the VVRM notifies the TG-AS to enter the service.

If necessary, Step D14 may be further included, in which the TG-AS and the VUE perform an interaction before using the service, for example, setting the VUE environment, and downloading and installing the client programs required when using the service provided by the TG-AS. After finishing the above steps, the UE can use the services provided by the TG-AS through the VUE.
(5) The VUE initiates a service call.

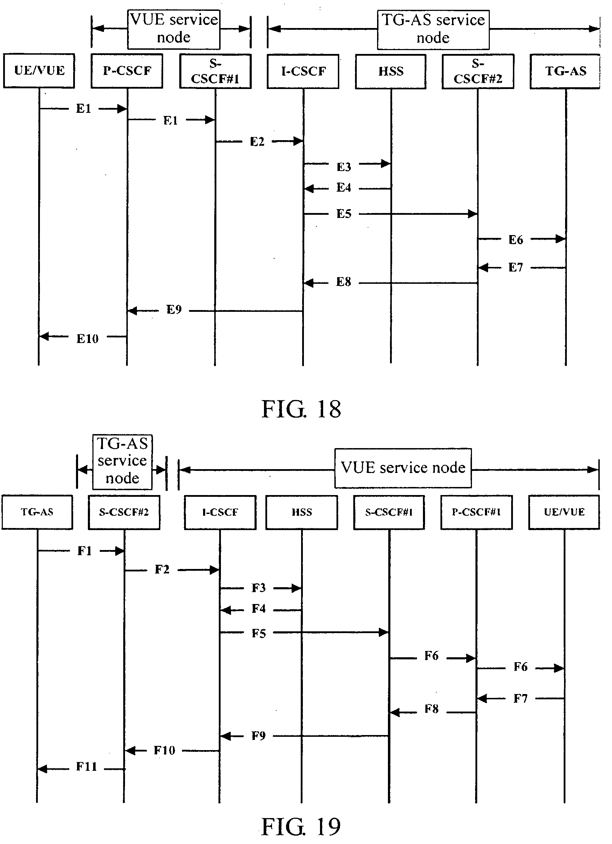

The user uses the service with an identity of the virtual terminal, and initiates a call with the identity of the virtual terminal. The P-CSCF determines that the user is the virtual user according to the identity of the virtual terminal, and routes the relevant service processing to the S-CSCF of the visitor location, so as to finish the process that the VUE initiates the service call. Referring to FIG 18, the flow includes the following steps.

In Step E1, the VUE sends a service call request to the P-CSCF in the visitor location network with the identifier (v_user_id) in the visitor location, so as to request to create a session to the TG-AS. The P-CSCF considers the virtual user as the user in the visitor location network, and forwards the service call request to the S-CSCF# 1 of the VUE.

In Step E2, after performing the service verification on the VUE, including executing the service control, the S-CSCF#1 requests the S-CSCF of the TG-AS from the I-CSCF.

In Step E3, the I-CSCF interrogates the registered data of the TG-AS from the HSS.

In Step E4, the HSS returns the TG-AS data to the I-CSCF, including the S-CSCF of the TG-AS, which is set to S-CSCF#2.

In Step E5, the I-CSCF forwards the service call request to the S-CSCF#2.

In Step E6, the S-CSCF#2 forwards the INVITE to the TG-AS.

And then, the TG-AS returns a response to the VUE along a signaling path, which specifically includes the following steps.

In Step E7, the TG-AS returns the response to the S-CSCF#2.

In Step E8, the S-CSCF#2 forwards the response to the I-CSCF.

In Step E9, the I-CSCF forwards the response to the P-CSCF.

In Step E10, the P-CSCF forwards the response to the VUE.

Other negotiation processes may further be performed subsequently. Till now, the session from the VUE to the TG-AS is created.
(6) The VUE receives a service call.

The call to the VUE is similar to that to a common user, and the S-CSCF and the P-CSCF are responsible for controlling the service process. When other users or ASs call the virtual user (by using the virtual identity), the communication service with the VUE is provided through the S-CSCF and the P-CSCF. Referring to FIG. 19, the signaling flow that the VUE receives a service call of the TG-AS includes the following steps.

In Step F1, the TG-AS calls the VUE by using the identifier (v_user_id) of the VUE in the visited network, and sends a call request to the S-CSCF (S-CSCF#2) of the TG-AS.

In Step F2, the S-CSCF#2 forwards the call request to the I-CSCF.

In Step F3, the I-CSCF requests the registered data of the VUE from the HSS.

In Step F4, the HSS returns the registered data of the VUE, including the S-CSCF. Here, it is assumed to be the S-CSCF#1.

In Step F5, the I-CSCF forwards the call request to the S-CSCF#1.

In Step F6, the S-CSCF#1 verifies the VUE and performs the service control processing.

Then, the S-CSCF#1 forwards the call request to the P-CSCF#1, and then, the P-CSCF#1 sends the call request to the VUE.

Then, the VUE receives the call request, and returns a response. The response is returned to the TG-AS along the signaling path. Other negotiation processes may further performed subsequently. Till now, the session from the TG-AS to the VUE is created. The flow specifically includes the following steps.

In Step F7, the VUE returns the response to the P-CSCF#1.

In Step F8, the P-CSCF#1 forwards the response to the S-CSCF#1.

In Step F9, the S-CSCF#1 forwards the response to the I-CSCF.

In Step F10, the I-CSCF forwards the response to the S-CSCF#2.

In Step F11, the S-CSCF#2 forwards the response to the TG-AS.
(7) A flow of logging out the service is performed.

Taking the logging-out of the TG-AS as an example, the service may be logged out through the following two manners. (1) The CRM-VUE is selected, and the registered service is logged out through service maintenance in the CRM-VUE. (2) The user selects a client of the TG-AS, and selects to log out the service through the client of the TG-AS.

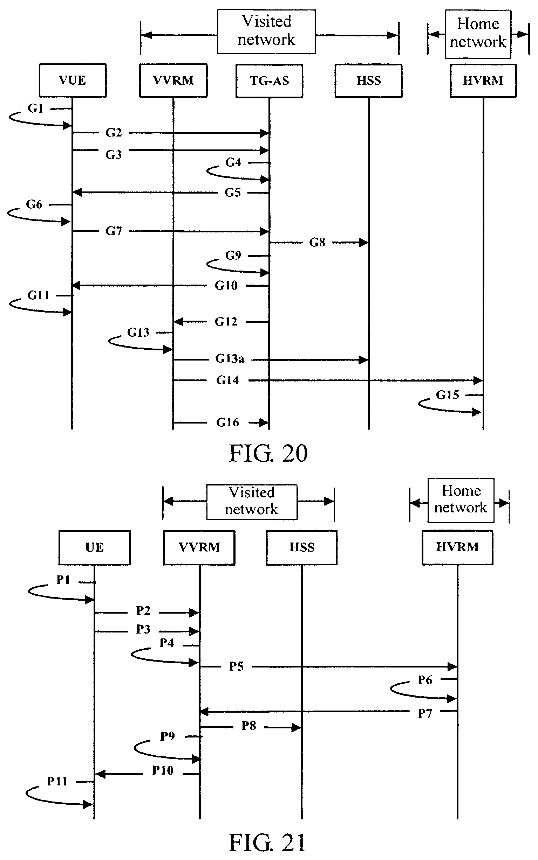

The process of logging out the service through the client of the TG-AS is considered below, and it is assumed that the service logging out process is unifiedly controlled and managed by the VVRM. Referring to FIG. 20, the specific signaling flow includes the following steps.

In Step G1, the client of the TG-AS is opened, and it is selected to log out the service.

In Step G2, the client creates the session to the TG-AS.

In Step G3, the logout request is sent to the TG-AS.

In Step G4, the TG-AS performs statistics on the details of using the service by the VUE.

In Step G5, the TG-AS returns a statistics result to the client.

In Step G6, the client shows the statistics on the using details to the client.

In Step G7, the client selects to confirm the logout and sends a confirmed result to the TG-AS.

If necessary, Step G8 may be further included, in which the TG-AS logs-out the service subscription from the HSS.

In Step G9, the TG-AS marks the logout.

In Step G10, the TG-AS returns the logout result to the client.

In Step G11, the client shows the ending, and cleans itself up.

Then, the TG-AS and the VVRM finish the background cleanup operation of the user service, which includes the following steps.

In Step G 12, the TG-AS sends the logout request to the VVRM.

In Step G13, the VVRM marks the logout.

If necessary, Step G13a may be further included, in which the VVRM may need to perform the service logout operation from the HSS.

In Step G14, the VVRM forwards the logout request to the HVRM of the home network.

In Step G 15, the HVRM registers and records the logout.

In Step G16, the VVRM returns the logout result to the TG-AS.

Till now, the service logout is completed.
(8)The flow of logging out the virtual terminal is performed.

The logging out of the virtual terminal is started through the CRM-VUE, or is performed while the service is logged out. In addition, when the terminal leaves the visitor location, the virtual terminal and relevant services will also be automatically logged out. However, relevant interface elements must be cleaned up manually. During the logout process, the confirmation with the terminal does not exist at more.

For example, the terminal is logged out below through the CRM-VUE, and the process of logging out the virtual terminal is as shown in FIG. 21.

In Step P1, the terminal enters the CRM-VUE, and selects to log out the virtual terminal.

In Step P2, the CRM-VUE creates the session to the VVRM.

In Step P3, the CRM-VUE sends the logout request to the VVRM.

In Step P4, the VVRM marks the logout.

In Step P5, the VVRM delivers the logout notification to the home network.

In Step P6, after receiving the logout notification, the HVRM registers and records the logout notification.

In Step P7, the HVRM returns a response.

In Step P8, the VVRM logs-out the virtual terminal from the HSS of the visitor location.

In Step P9, the VVRM marks the log-out result.

In Step P10, the VVRM returns the logout result to the CRM-VUE.

In Step P11, the CRM-VUE reports the logout result, and cleans itself up.

To sum up, the present invention has the following beneficial effects. Under the situation that the home network can perform the license registration at a visited network, the terminal selects the services provided by the visited network, and the user can use various convenient services provided by the visited network to the visiting terminal through the virtual terminal, so that the user can enjoy the experience under the roaming situation. Through the simple business protocol between the home network operator and the visited network operator, the service scope capable of being used by the user is expanded, the cost is saved, the customer loyalty is improved, and the benefit of the operator is definitely improved.

In the embodiments of the present invention, the structure modification and service using method for the roaming solution are not only applicable to the IMS network, but also applicable to a global system for mobile communications (GSM) network and a general packet radio service (GPRS) network. In addition, the solution of the present invention is not only applicable to international roaming, but also applicable to other various situations of roaming across different operators.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims.

## Claims

1. A visited network service using system, comprising a visited network and a home network, wherein the visited network comprises a first home subscriber server HSS (210) and a servicing server (300) connected to the first HSS (210), and the home network comprises a second HSS (220), **characterized in that**:
the visited network further comprises a visiting virtual roaming management VVRM unit (1,10), adapted to log-in or log-out virtual terminal information after receiving a log-in or log-out notification of the virtual terminal information of a visiting terminal; and the VVRM unit (110) is connected to the first HSS (210) and/or the servicing server (300), and is adapted to log-in or log-out service subscription information after receiving a log-in or log-out notification of the service subscription information of a virtual terminal;
the home network further comprises a home virtual roaming management HVRM unit (120), connected to the second HSS (220); and adapted to send a log-in notification of the virtual terminal information to the VVRM unit (110) in the visited network according to a visited network service use license of a home terminal when detecting a registration message of the home terminal in the visited network and detecting that the virtual terminal information of the home terminal in the visited network is not activated, and send a log-in notification of the service subscription information to the VVRM unit (110) in the visited network according to the visited network service use license of the home terminal when detecting that the virtual terminal information of the home terminal in the visited network is activated and requested service subscription information is not activated; and
the VVRM unit (110) and the HVRM unit (120) are connected to each other, and are adapted to cooperate with each other to control a log-in or logout operation of the virtual terminal information and the service subscription information;
wherein the virtual terminal information is the information of the virtual terminal which is adapted to be activated by the visited network for the visiting terminal, and to be used by the visiting terminal to activate services provided by the visited network.

2. The system according to claim 1, wherein the VVRM unit (111) comprises:
a visiting virtual terminal database (1111), adapted to record a log-in or log-out situation and a log-in or log-out situation of the service subscription information of the virtual terminal information of the visiting terminal; and
a visiting virtual terminal control module (1112), connected to the visiting virtual terminal database (1111); and adapted to log-in or log-out the virtual terminal information after receiving the log-in or log-out notification of the virtual terminal information of the visiting terminal and record the log-in or log-out situation of the virtual terminal information into the visiting virtual terminal database (1111), log-in or log-out the service subscription information after receiving the log-in or log-out notification of the service subscription information of the virtual terminal, and record the log-in or log-out situation of the service subscription information into the visiting virtual terminal database (1111).

3. The system according to claim 1, wherein the HVRM unit (121) comprises:
a home virtual terminal database (1211), adapted to record a log-in or log-out situation of the virtual terminal information and a log-in or log-out situation of the service subscription information of the home terminal in the visitor location network; and
a home virtual terminal control module (1212), connected to the home virtual terminal database (1211); and adapted to send the log-in notification of the virtual terminal information to the visited network when detecting the registration message of the home terminal in the visited network and detecting that the virtual terminal information of the home terminal in the visited network is not activated, send the log-in notification of the service subscription information to the visited network when detecting that the virtual terminal information of the home terminal in the visited network is activated and requested service subscription information is not activated, record that the virtual terminal information is logged-in or logged-out after receiving a log-in or log-out success notification of the virtual terminal information of the home terminal, and record that the service subscription information is logged-in or logged-out after receiving a log-in or log-out success notification of the service subscription information.

4. A terminal, **characterized by** comprising a virtual terminal unit (410), wherein the virtual terminal unit (410) is adapted to store virtual terminal information of the terminal, which is adapted to be activated by a visited network according to claim 1, when the terminal roams to the visited network; the terminal is adapted to activate service subscription information provided by the visited network through the virtual terminal unit (410); the virtual terminal unit (410) is adapted to select a required visited network service and to send a log-in application of the service subscription information to a visiting virtual roaming management VVRM unit (110) in the visited network; wherein the virtual terminal information is the information of the virtual terminal which is adapted to be activated by the visited network for the visiting terminal, and to be used by the visiting terminal to activate services provided by the visited network.

5. The terminal according to claim 4, wherein the virtual terminal unit (410) comprises:
a storage module (411), adapted to store the virtual terminal information;
a registration module (412), connected to the storage module (411), and adapted to register the virtual terminal information at the visited network; and
a service subscription module (413), connected to the storage module (411) and the registration module (412), and adapted to activate the service subscription information provided by the visitor location network.

6. A method for activating a visited network service, **characterized by** comprising:
sending a registration message of a home terminal in a visited network to a home network from the visited network;
notifying, by a home virtual roaming management (HVRM) unit (120) in the home network, the home terminal to register virtual terminal information thereof at the visited network after confirming that the virtual terminal information of the home terminal in the visited network is activated; activating a virtual terminal by the visited network for the visiting terminal;
selecting, by the virtual terminal, a required visited network service and sending a log-in application of visited network service subscription information to a visiting virtual roaming management VVRM unit (110) in the visited network; and
activating, by the VVRM unit (110) in the visited network, the visited network service subscription information for the virtual terminal;
wherein the virtual terminal information is the information of the virtual terminal which is adapted to be activated by the visited network for the visiting terminal, and to be used by the visiting terminal to activate services provided by the visited network.

7. The method according to claim 6, wherein before sending the registration message of the home terminal in the visited network to the home network from the visited network, the method further comprises: applying, by the visiting terminal, for a visited network service use license from the home network thereof, the visited network service use license specifies visited networks and visited network services provided by the visited networks capable of being selected by the visiting terminal.

8. The method according to claim 6, wherein after the activating, by the VVRM unit (110) in the visited network, the visited network service for the virtual terminal, the method further comprises: using, by the visiting terminal, the visited network service through the virtual terminal information.

9. The method according to claim 6, 7, or 8, wherein the confirming, by the HVRM unit (120) in the home network, that the virtual terminal information of the home terminal in the visited network is activated further comprises: interrogating, by the HVRM unit (120) in the home network, whether the virtual terminal information of the home terminal in the visited network is activated or not; if the virtual terminal information of the home terminal in the visited network is activated, notifying the home terminal to register the virtual terminal information thereof at the visited network; otherwise, notifying the VVRM unit (110) in the visited network to activate the virtual terminal information of the home terminal.

10. The method according to claim 9, wherein the activating, by the VVRM unit (110) in the visited network, the virtual terminal information of the visiting terminal specifically comprises:
activating and storing, by the VVRM unit (110) in the visited network, the virtual terminal information of the visiting terminal;
sending, by the VVRM unit (110) in the visited network, a log-in success message of the virtual terminal information to the HVRM unit (120) in the home network; and
recording, by the HVRM unit (120) in the home network, that the virtual terminal information of the home terminal in the visited network is activated.

11. The method according to claim 6, 7, or 8, wherein the selecting, by the virtual terminal, the required visited network service specifically comprises: selecting, by the virtual terminal, the required visited network service from a customer relationship management module (424).

12. The method according to claim 11, wherein after the registering by the visiting terminal, the virtual terminal information thereof at the visited network, and before the selecting, by the virtual terminal, the required visited network service from the customer relationship management module (424), the method further comprises: installing the customer relationship management module (424) in the virtual terminal.

13. The method according to claim 12, wherein the installing the customer relationship management module (424) in the virtual terminal specifically comprises:
judging, by the VVRM unit (110) in the visited network, whether the virtual terminal registers at the visited network for the first time or not; if the virtual terminal registers at the visited network for the first time, notifying the virtual terminal to download the customer relationship management module (424); otherwise, selecting, by the virtual terminal, the required visited network service from the customer relationship management module (424).

## Patentansprüche

1. Dienstnutzungssystem in einem besuchten Netz, wobei das System ein besuchtes Netz und ein Heimatnetz umfasst, wobei das besuchte Netz einen ersten Heimatteilnehmerserver HSS (210) und einen versorgenden Server (300), der mit dem ersten HSS (210) verbunden ist, umfasst und das Heimatnetz einen zweiten HSS (220) umfasst, **dadurch gekennzeichnet, dass**:
das besuchte Netz ferner eine virtuelle Besuchs-Roaming-Management-Einheit, VVRM-Einheit, (110) umfasst, die ausgelegt ist, Informationen über ein virtuelles Endgerät nach dem Empfangen einer Anmelde- oder Abmelde-Benachrichtigung der Informationen über das virtuelle Endgerät eines besuchenden Endgeräts anzumelden oder abzumelden; und wobei die VVRM-Einheit (110) mit dem ersten HSS (210) und/oder dem versorgenden Server (300) verbunden ist und ausgelegt ist, Dienstabonnementsinformationen nach dem Empfangen einer Anmelde- oder Abmelde-Benachrichtigung über die Dienstabonnementsinformationen eines virtuellen Endgeräts anzumelden oder abzumelden;
das Heimatnetz ferner eine virtuelle Heimat-Roaming-Management-Einheit, HVRM-Einheit, (120) umfasst, die mit dem zweiten HSS (220) verbunden ist; und ausgelegt ist, eine Anmelde-Benachrichtigung über die Informationen über das virtuelle Endgerät zu der VVRM-Einheit (110) in dem besuchten Netz gemäß einer Dienstnutzungslizenz für das besuchte Netz eines Heimatendgeräts zu senden, wenn eine Eintragungsnachricht des Heimatendgeräts in dem besuchten Netz detektiert wird und detektiert wird, dass die Informationen über das virtuelle Endgerät des Heimatendgeräts in dem besuchten Netz nicht aktiviert sind, und eine Anmelde-Benachrichtigung über die Dienstabonnementsinformationen zu der VVRM-Einheit (110) in dem besuchten Netz gemäß der Dienstnutzungslizenz für das besuchte Netz des Heimatendgeräts zu senden, wenn detektiert wird, dass die Informationen über das virtuelle Endgerät des Heimatendgeräts in dem besuchten Netz aktiviert sind und die Abonnementsinformationen für den angeforderten Dienst nicht aktiviert sind; und
die VVRM-Einheit (110) und die HVRM-Einheit (120) miteinander verbunden und ausgelegt sind, miteinander zusammenzuwirken, um eine Anmelde- oder Abmelde-Operation der Informationen über das virtuelle Endgerät und der Dienstabonnementsinformationen zu steuern;
wobei die Informationen über das virtuelle Endgerät die Informationen des virtuellen Endgeräts sind, die ausgelegt sind, durch das besuchte Netz für das besuchende Endgerät aktiviert zu werden und durch das besuchende Endgerät verwendet zu werden, um Dienste, die durch das besuchte Netz bereitgestellt sind, zu aktivieren.

2. System nach Anspruch 1, wobei die VVRM-Einheit (111) Folgendes umfasst:
eine Datenbank (1111) für besuchende virtuelle Endgeräte, die ausgelegt ist, eine Anmelde- oder Abmeldesituation und eine Anmelde- oder Abmeldesituation der Dienstabonnementsinformationen der Informationen über das virtuelle Endgerät des besuchenden Endgeräts aufzuzeichnen; und
ein Steuermodul (1112) für besuchende virtuelle Endgeräte, das mit der Datenbank (1111) für besuchende virtuelle Endgeräte verbunden ist; und ausgelegt ist, die Informationen über das virtuelle Endgerät nach dem Empfangen der Anmelde- oder Abmelde-Benachrichtigung der Informationen über das virtuelle Endgerät des besuchenden Endgeräts anzumelden oder abzumelden und die Anmelde- oder Abmelde-Situation der Informationen über das virtuelle Endgerät in die Datenbank (1111) für besuchende virtuelle Endgeräte aufzuzeichnen, die Dienstabonnementsinformationen nach dem Empfangen der Anmelde- oder Abmelde-Benachrichtigung für die Dienstabonnementsinformationen des virtuellen Endgeräts anzumelden oder abzumelden und die Anmelde- oder Abmelde-Situation der Dienstabonnementsinformationen in die Datenbank (1111) für besuchende virtuelle Endgeräte aufzuzeichnen.

3. System nach Anspruch 1, wobei die HVRM-Einheit (121) Folgendes umfasst:
eine Datenbank (1211) für virtuelle Heimatendgeräte, die ausgelegt ist, eine Anmelde- oder Abmelde-Situation der Informationen über das virtuelle Endgerät und eine Anmelde- oder Abmelde-Situation der Dienstabonnementsinformationen des Heimatendgeräts in dem Besucherortnetz aufzuzeichnen; und
ein Steuermodul (1212) für virtuelle Heimatendgeräte, das mit der Datenbank (1211) für virtuelle Heimatendgeräte verbunden ist; und ausgelegt ist, die Anmelde-Benachrichtigung für die Informationen über das virtuelle Endgerät zu dem besuchten Netz zu senden, wenn die Eintragungsnachricht des Heimatendgeräts in dem besuchten Netz detektiert wird und detektiert wird, dass die Informationen über das virtuelle Endgerät des Heimatendgeräts in dem besuchten Netz nicht aktiviert sind, die Anmelde-Benachrichtigung für die Dienstabonnementsinformationen zu dem besuchten Netz zu senden, wenn detektiert wird, dass die Informationen über das virtuelle Endgerät des Heimatendgeräts in dem besuchten Netz aktiviert sind und Abonnementsinformationen für den angeforderten Dienst nicht aktiviert sind, aufzuzeichnen, dass die Informationen über das virtuelle Endgerät angemeldet oder abgemeldet werden, nach dem Empfangen einer Anmelde- oder Abmelde-Erfolgsbenachrichtigung für die Informationen über das virtuelle Endgerät des Heimatendgeräts, und aufzuzeichnen, dass die Dienstabonnementsinformationen angemeldet oder abgemeldet werden, nach dem Empfangen einer Anmelde- oder Abmelde-Erfolgsbenachrichtigung für die Dienstabonnementsinformationen.

4. Endgerät, **dadurch gekennzeichnet, dass** es eine virtuelle Endgeräteeinheit (410) umfasst, wobei die virtuelle Endgeräteeinheit (410) ausgelegt ist, Informationen über das virtuelle Endgerät des Endgeräts zu speichern, die ausgelegt sind, um durch ein besuchtes Netz nach Anspruch 1 aktiviert zu werden, wenn sich das Endgerät in dem besuchten Netz aufhält; das Endgerät ausgelegt ist, Dienstabonnementsinformationen, die durch das besuchte Netz über die virtuelle Endgeräteeinheit (410) bereitgestellt sind, zu aktivieren; wobei die virtuelle Endgeräteeinheit (410) ausgelegt ist, einen erforderlichen Dienst des besuchten Netzes auszuwählen und einen Anmelde-Antrag für die Dienstabonnementsinformationen einer virtuellen Besuchs-Roaming-Management-Einheit, VVRM-Einheit, (110) in dem besuchten Netz zu senden; wobei die Informationen über das virtuelle Endgerät die Informationen des virtuellen Endgeräts sind, die ausgelegt sind, durch das besuchte Netz für das besuchende Endgerät aktiviert zu werden und durch das besuchende Endgerät verwendet zu werden, um Dienste, die durch das besuchte Netz bereitgestellt sind, zu aktivieren.

5. Endgerät nach Anspruch 4, wobei die virtuelle Endgeräteeinheit (410) Folgendes umfasst:
ein Speichermodul (411), das ausgelegt ist, die Informationen über das virtuelle Endgerät zu speichern;
ein Eintragungsmodul (412), das mit dem Speichermodul (411) verbunden ist und ausgelegt ist, die Informationen über das virtuelle Endgerät in dem besuchten Netz einzutragen; und
ein Dienstabonnementsmodul (413), das mit dem Speichermodul (411) und dem Eintragungsmodul (412) verbunden ist und ausgelegt ist, die Dienstabonnementsinformationen, die durch das Besucherortnetz bereitgestellt sind, zu aktivieren.

6. Verfahren zum Aktivieren eines Dienstes des besuchten Netzes, **dadurch gekennzeichnet, dass** es Folgendes umfasst:
Senden einer Eintragungsnachricht eines Heimatendgeräts in einem besuchten Netz von dem besuchten Netz zu einem Heimatnetz;
Benachrichtigen durch eine virtuelle Heimat-Roaming-Management-Einheit, HVRM-Einheit, (120) in dem Heimatnetz des Heimatendgeräts, Informationen über sein virtuelles Endgerät in dem besuchten Netz einzutragen nach dem Bestätigen, dass die Informationen über das virtuelle Endgerät des Heimatendgeräts in dem besuchten Netz aktiviert sind; Aktivieren eines virtuellen Endgeräts durch das besuchte Netz für das besuchende Endgerät;
Auswählen durch das virtuelle Endgerät eines erforderlichen Dienstes des besuchten Netzes und Senden eines Anmelde-Antrags für Dienstabonnementsinformationen des besuchten Netzes zu einer virtuellen Besuchs-Roaming-Management-Einheit, VVRM-Einheit, (110) in dem besuchten Netz; und
Aktivieren durch die VVRM-Einheit (110) in dem besuchten Netz der Dienstabonnementsinformationen des besuchten Netzes für das virtuelle Endgerät; wobei die Informationen über das virtuelle Endgerät die Informationen des virtuellen Endgeräts sind, die ausgelegt sind, durch das besuchte Netz für das besuchende Endgerät aktiviert zu werden und durch das besuchende Endgerät verwendet zu werden, um Dienste, die durch das besuchte Netz bereitgestellt sind, zu aktivieren.

7. Verfahren nach Anspruch 6, wobei das Verfahren vor dem Senden der Eintragungsnachricht des Heimatendgeräts in dem besuchten Netz zu dem Heimatnetz von dem besuchten Netz ferner Folgendes umfasst: Beantragen durch das besuchende Endgerät einer Dienstnutzungslizenz für das besuchte Netz von seinem Heimatnetz, wobei die Dienstnutzungslizenz für das besuchte Netz besuchte Netze und Dienste von besuchten Netzen, die durch die besuchten Netze bereitgestellt sind, spezifiziert, die durch das besuchende Endgerät ausgewählt werden können.

8. Verfahren nach Anspruch 6, wobei das Verfahren nach dem Aktivieren durch die VVRM-Einheit (110) in dem besuchten Netz des Dienstes des besuchten Netzes für das virtuelle Endgerät ferner Folgendes umfasst: Verwenden durch das besuchende Endgerät des Dienstes des besuchten Netzes durch die Informationen über das virtuelle Endgerät.

9. Verfahren nach Anspruch 6, 7 oder 8, wobei das Bestätigen durch die HVRM-Einheit (120) in dem Heimatnetz, dass die Informationen über das virtuelle Endgerät des Heimatendgeräts in dem besuchten Netz aktiviert sind, ferner Folgendes umfasst:
Abfragen durch die HVRM-Einheit (120) in dem Heimatnetz, ob die Informationen über das virtuelle Endgerät des Heimatendgeräts in dem besuchten Netz aktiviert sind oder nicht; falls die Informationen über das virtuelle Endgerät des Heimatendgeräts in dem besuchten Netz aktiviert sind, Benachrichtigen des Heimatendgeräts, die Informationen über sein virtuelles Endgerät in dem besuchten Netz einzutragen; andernfalls Benachrichtigen der VVRM-Einheit (110) in dem besuchten Netz, die Informationen über das virtuelle Endgerät des Heimatendgeräts zu aktivieren.

10. Verfahren nach Anspruch 9, wobei das Aktivieren durch die VVRM-Einheit (110) in dem besuchten Netz der Informationen über das virtuelle Endgerät des besuchenden Endgeräts insbesondere Folgendes umfasst:
Aktivieren und Speichern durch die VVRM-Einheit (110) in dem besuchten Netz der Informationen über das virtuelle Endgerät des besuchenden Endgeräts;
Senden durch die VVRM-Einheit (110) in dem besuchten Netz einer Anmelde-Erfolgsnachricht für die Informationen über das virtuelle Endgerät zu der HVRM-Einheit (120) in dem Heimatnetz; und
Aufzeichnen durch die HVRM-Einheit (120) in dem Heimatnetz, dass die Informationen über das virtuelle Endgerät des Heimatendgeräts in dem besuchten Netz aktiviert sind.

11. Verfahren nach Anspruch 6, 7 oder 8, wobei das Auswählen durch das virtuelle Endgerät des erforderlichen Dienstes des besuchten Netzes insbesondere Folgendes umfasst: Auswählen durch das virtuelle Endgerät des erforderlichen Dienstes des besuchten Netzes aus einem Kundenbeziehungsmanagementmodul (424).

12. Verfahren nach Anspruch 11, wobei das Verfahren nach dem Eintragen durch das besuchende Endgerät der Informationen über sein virtuelle Endgerät in dem besuchten Netz und vor dem Auswählen durch das virtuelle Endgerät des erforderlichen Dienstes des besuchten Netzes aus dem Kundenbeziehungsmanagementmodul (424) ferner Folgendes umfasst: Installieren des Kundenbeziehungsmanagementmoduls (424) in dem virtuellen Endgerät.

13. Verfahren nach Anspruch 12, wobei das Installieren des Kundenbeziehungsmanagementmoduls (424) in dem virtuellen Endgerät insbesondere Folgendes umfasst:
Beurteilen durch die VVRM-Einheit (110) in dem besuchten Netz, ob sich das virtuelle Endgerät in dem besuchten Netz zum ersten Mal einträgt oder nicht; falls sich das virtuelle Endgerät in dem besuchten Netz zum ersten Mal einträgt, Benachrichtigen des virtuellen Endgeräts, das Kundenbeziehungsmanagementmodul (424) herunterzuladen; andernfalls Auswählen durch das virtuelle Endgerät des erforderlichen Dienstes des besuchten Netzes aus dem Kundenbeziehungsmanagementmodul (424).

## Revendications

1. Système utilisant un service de réseau visité, comprenant un réseau visité et un réseau résidentiel, dans lequel le réseau visité comprend un premier serveur d'abonné résidentiel HSS (Home Subsriber Server) (210) et un serveur de desserte (300) connecté au premier HSS (210), et le réseau résidentiel comprend un second HSS (220), **caractérisé en ce que** :
le réseau visité comprend en outre une unité de gestion d'itinérance virtuelle de visite VVRM (Visiting Virtual Roaming Management) (110), apte à fournir en entrée ou fournir en sortie des informations de terminal virtuel après la réception d'une notification de fourniture en entrée ou de fourniture en sortie des informations de terminal virtuel d'un terminal visiteur; et l'unité VVRM (110) est connecté au premier HSS (210) et/ou au serveur de desserte (300), et est apte à fournir en entrée ou fournir en sortie des informations d'abonnement aux services après la réception d'une notification de fourniture en entrée ou de fourniture en sortie des informations d'abonnement aux services d'un terminal virtuel ;
le réseau résidentiel comprend en outre une unité de gestion d'itinérance virtuelle résidentielle HVRM (Home Virtual Roaming Management) (120), connectée au second HSS (220) ; et apte à envoyer une notification de fourniture en entrée des informations de terminal virtuel à l'unité VVRM (110) dans le réseau visité conformément à une licence d'utilisation de service de réseau visité d'un terminal résidentiel lors de la détection d'un message d'inscription du terminal résidentiel dans le réseau visité et de la détection du fait que les informations de terminal virtuel du terminal résidentiel dans le réseau visité ne sont pas activées, et envoyer une notification de fourniture en entrée des informations d'abonnement aux services à l'unité VVRM (110) dans le réseau visité conformément à la licence d'utilisation de service de réseau visité du terminal résidentiel lors de la détection du fait que les informations de terminal virtuel du terminal résidentiel dans le réseau visité sont activées et que des informations d'abonnement aux services demandées ne sont pas activées ; et
l'unité VVRM (110) et l'unité HVRM (120) sont connectées l'une à l'autre, et sont aptes à coopérer l'une avec l'autre afin de commander une opération de fourniture en entrée ou de fourniture en sortie des informations de terminal virtuel et des informations d'abonnement ;
dans lequel les informations de terminal virtuel sont les informations du terminal virtuel qui sont aptes à être activées par le réseau visité pour le terminal visiteur, et à être utilisées par le terminal visiteur afin d'activer des services fournis par le réseau visité.

2. Système selon la revendication 1, dans lequel l'unité VVRM (111) comprend :
une base de données de terminaux virtuels visiteurs (1111), apte à enregistrer une situation de fourniture en entrée ou de fourniture en sortie et une situation de fourniture en entrée ou de fourniture en sortie des informations d'abonnement aux services des informations de terminal virtuel du terminal visiteur ; et
un module de commande de terminal virtuel visiteur (1112), connecté à la base de données de terminaux virtuels visiteurs (1111) ; et apte à fournir en entrée ou fournir en sortie les informations de terminal virtuel après la réception de la notification de fourniture en entrée ou de fourniture en sortie des informations de terminal virtuel du terminal visiteur et enregistrer la situation de fourniture en entrée ou de fourniture en sortie des informations de terminal virtuel dans la base de données de terminaux virtuels visiteurs (1111), fournir en entrée ou fournir en sortie les informations d'abonnement aux services après la réception de la notification de fourniture en entrée ou de fourniture en sortie des informations d'abonnement aux services du terminal virtuel, et enregistrer la situation de fourniture en entrée ou de fourniture en sortie des informations d'abonnement aux services dans la base de données de terminaux virtuels visiteurs (1111).

3. Système selon la revendication 1, dans lequel l'unité HVRM (121) comprend :
une base de données de terminaux virtuels résidentiels (1211), apte à enregistrer une situation de fourniture en entrée ou de fourniture en sortie des informations de terminal virtuel et une situation de fourniture en entrée ou de fourniture en sortie des informations d'abonnement aux services du terminal résidentiel dans le réseau de localisation de visiteurs ; et
un module de commande de terminal virtuel résidentiel (1212), connecté à la base de données de terminaux virtuels résidentiels (1211) ; et apte à envoyer la notification de fourniture en entrée des informations de terminal virtuel au réseau visité lors de la détection du message d'inscription du terminal résidentiel dans le réseau visité et de la détection du fait que les informations de terminal virtuel du terminal résidentiel dans le réseau visité ne sont pas activées, envoyer la notification de fourniture en entrée des informations d'abonnement aux services au réseau visité lors de la détection du fait que les informations de terminal virtuel du terminal résidentiel dans le réseau visité sont activées et que des informations demandées d'abonnement aux services ne sont pas activées, enregistrer le fait que les informations de terminal virtuel sont fournies en entrée ou fournies en sortie après la réception d'une notification de réussite de la fourniture en entrée ou de la fourniture en sortie des informations de terminal virtuel du terminal résidentiel, et enregistrer le fait que les informations d'abonnement aux services sont fournies en entrée ou fournies en sortie après la réception d'une notification de réussite de la fourniture en entrée ou de la fourniture en sortie des informations d'abonnement aux services.

4. Terminal, **caractérisé en ce qu'**il comprend une unité de terminal virtuel (410), dans lequel l'unité de terminal virtuel (410) est apte à stocker des informations de terminal virtuel du terminal, qui sont aptes à être activées par un réseau visité selon la revendication 1, lorsque le terminal est en itinérance vers le réseau visité ; le terminal est apte à activer des informations d'abonnement aux services, fournies par le réseau visité par l'intermédiaire de l'unité de terminal virtuel (410) ; l'unité de terminal virtuel (410) est apte à sélectionner un service de réseau visité requis et à envoyer une demande de fourniture en entrée des informations d'abonnement aux services à une unité de gestion d'itinérance virtuelle de visite VVRM (110) dans le réseau visité ; dans lequel les informations de terminal virtuel sont les informations du terminal virtuel qui sont aptes à être activées par le réseau visité pour le terminal visiteur, et à être utilisées par le terminal visiteur afin d'activer des services fournis par le réseau visité.

5. Terminal selon la revendication 4, dans lequel l'unité de terminal virtuel (410) comprend :
un module de stockage (411), apte à stocker les informations de terminal virtuel ;
un module d'inscription (412), connecté au module de stockage (411), et apte à inscrire les informations de terminal virtuel sur le réseau visité ; et
un module d'abonnement aux services (413), connecté au module de stockage (411) et au module d'inscription (412), et apte à activer les informations d'abonnement aux services, fournies par le réseau de localisation de visiteurs.

6. Procédé d'activation d'un service de réseau visité, **caractérisé en ce qu'**il comprend :
l'envoi d'un message d'inscription d'un terminal résidentiel dans un réseau visité à un réseau résidentiel depuis le réseau visité ;
la notification, par une unité de gestion d'itinérance virtuelle résidentielle (HVRM) (120) dans le réseau résidentiel, au terminal résidentiel d'inscrire ses informations de terminal virtuel sur le réseau visité après avoir confirmé que les informations de terminal virtuel du terminal résidentiel dans le réseau visité sont activées ;
l'activation d'un terminal virtuel par le réseau visité pour le terminal visiteur ;
la sélection, par le terminal virtuel, d'un service de réseau visité requis et l'envoi d'une demande de fourniture en entrée d'informations d'abonnement aux services de réseau visité à une unité de gestion d'itinérance virtuelle de visite VVRM (110) dans le réseau visité ; et
l'activation, par l'unité VVRM (110) dans le réseau visité, des informations d'abonnement aux services de réseau visité pour le terminal virtuel ;
dans lequel les informations de terminal virtuel sont les informations du terminal virtuel qui sont aptes à être activées par le réseau visité pour le terminal visiteur, et à être utilisées par le terminal visiteur afin d'activer des services fournis par le réseau visité.

7. Procédé selon la revendication 6, dans lequel, avant l'envoi du message d'inscription du terminal résidentiel dans le réseau visité au réseau résidentiel depuis le réseau visité, le procédé comprend en outre : la demande, par le terminal visiteur, d'une licence d'utilisation de service de réseau visité depuis son réseau résidentiel, la licence d'utilisation de service de réseau visité spécifiant des réseaux visités et des services de réseaux visités fournis par les réseaux visités et pouvant être sélectionnés par le terminal visiteur.

8. Procédé selon la revendication 6, dans lequel, après l'activation, par l'unité VVRM (110) dans le réseau visité, du service de réseau visité pour le terminal virtuel, le procédé comprend en outre : l'utilisation, par le terminal visiteur, du service de réseau visité par l'intermédiaire des informations de terminal virtuel.

9. Procédé selon la revendication 6, 7, ou 8, dans lequel la confirmation, par l'unité HVRM (120) dans le réseau résidentiel, du fait que les informations de terminal virtuel du terminal résidentiel dans le réseau visité sont activées comprend en outre :
l'interrogation, par l'unité HVRM (120) dans le réseau résidentiel, du fait de savoir si les informations de terminal virtuel du terminal résidentiel dans le réseau visité sont activées ou non ; si les informations de terminal virtuel du terminal résidentiel dans le réseau visité sont activées, la notification au terminal résidentiel d'inscrire ses informations de terminal virtuel sur le réseau visité ; sinon, la notification à l'unité VVRM (110) dans le réseau visité d'activer les informations de terminal virtuel du terminal résidentiel.

10. Procédé selon la revendication 9, dans lequel l'activation, par l'unité VVRM (110) dans le réseau visité, des informations de terminal virtuel du terminal visiteur comprend spécifiquement :
l'activation de et le stockage, par l'unité VVRM (110) dans le réseau visité, des informations de terminal virtuel du terminal visiteur ;
l'envoi, par l'unité VVRM (110) dans le réseau visité, d'un message de réussite de la fourniture en entrée des informations de terminal virtuel à l'unité HVRM (120) dans le réseau résidentiel ; et
l'enregistrement, par l'unité HVRM (120) dans le réseau résidentiel, du fait que les informations de terminal virtuel du terminal résidentiel dans le réseau visité sont activées.

11. Procédé selon la revendication 6, 7, ou 8, dans lequel la sélection, par le terminal virtuel, du service de réseau visité requis comprend spécifiquement : la sélection, par le terminal virtuel, du service de réseau visité requis depuis un module de gestion de relation client (424).

12. Procédé selon la revendication 11, dans lequel, après l'inscription par le terminal visiteur, de ses informations de terminal virtuel sur le réseau visité, et avant la sélection, par le terminal virtuel, du service de réseau visité requis depuis le module de gestion de relation client (424), le procédé comprend en outre : l'installation du module de gestion de relation client (424) dans le terminal virtuel.

13. Procédé selon la revendication 12, dans lequel l'installation du module de gestion de relation client (424) dans le terminal virtuel comprend spécifiquement :
le jugement, par l'unité VVRM (110) dans le réseau visité, du fait de savoir si le terminal virtuel s'inscrit sur le réseau visité pour la première fois ou non ; si le terminal virtuel s'inscrit sur le réseau visité pour la première fois, la notification au terminal virtuel de télécharger le module de gestion de relation client (424) ; sinon, la sélection, par le terminal virtuel, du service de réseau visité requis depuis le module de gestion de relation client (424).
